(19) Europäisches Patentamt
European Patent Office
Office européen des brevets

(11) **EP 2 104 111 A1**

(12) **EUROPÄISCHE PATENTANMELDUNG**

(43) Veröffentlichungstag:
**23.09.2009 Patentblatt 2009/39**

(51) Int Cl.:
***G12B 21/02*** (2006.01)

(21) Anmeldenummer: **08005248.3**

(22) Anmeldetag: **20.03.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(71) Anmelder: **NanoWorld AG
2007 Neuchâtel (CH)**

(72) Erfinder:
• **Sulzbach, Thomas
91085 Weisendorf (DE)**

• **Richter, Christoph
90762 Fürth (DE)**

(74) Vertreter: **Klocke, Peter
ABACUS Patentanwälte,
Klocke Späth Barth,
Kappelstrasse 8
72160 Horb (DE)**

Bemerkungen:
Geänderte Patentansprüche gemäss Regel 137(2)
EPÜ.

(54) **SPM-Sonde mit verkürztem Federbalken**

(57)    SPM-Sonde (1), bestehend aus Halteelement (2) und Federbalken (3), bei dem der Federbalken (3) erhöht gegenüber dem Halteelement (2) angeordnet ist. Das Halteelement (2) weist dazu eine längliche Erhebung (4) in Längsrichtung auf, an deren vorderen Stirnseite (12) der Federbalken (3) befestigt ist und die Länge des Federbalkens (3) mit hoher Präzision eingestellt ist.

Die spezielle Form des Haltelements (2) mit Erhebung (4) verhindert ein versehentliches Aufsetzen des Halteelements (2) auf der Probe bei Verkippung der Sonde (1). Die hohe Präzision der Federbalkenlängendefinition ermöglicht eine reproduzierbare Herstellung kleiner, hochfrequenter Federbalken (3) gemäß dem vorgeschlagenen Herstellungsverfahren zur Realisierung solcher SPM-Sonden.

Fig. 1

**Beschreibung**

Die Erfindung betrifft eine SPM-Sonde, mit einem Halteelement und mit einem Federbalken, der seitlich von dem Halteelement absteht und an seinem freien Ende eine Abtastspitze trägt, sowie ein Verfahren zur Herstellung derartiger Sonden.

Rasterkraftmikroskope, auch Scanning Probe Microscopy (SPM) genannt, sind allgemein bekannt und werden dazu benutzt, um mit feinen Sensoren, so genannten SPM-Sonden, die Oberfläche von Proben mit hoher Auflösung abzutasten. Bei all diesen Mikroskopen werden Sonden eingesetzt, deren Sensor von einem federnden Mikrobalken gebildet ist, der an einem Ende ein Halteelement zur Befestigung an einem Sondenträger und am anderen Ende eine Sensorspitze aufweist, mit der die Probe abgetastet wird.

Die Rastersondenmikroskopie hat sich zu einer etablierten Oberflächenanalysetechnik entwickelt, die unter anderem eine Abbildung von Oberflächentopographien mir einer Auflösung von wenigen Nanometern oder sogar bis in den atomaren Bereich hinein erlaubt.

Ein wesentliches Kernelement dieser Technik ist dabei die Abtastsonde. Die Beschaffenheit und Qualität der Sonden trägt maßgeblich zur erzielbaren Auflösung der Oberflächenanalyse bei. Für die Herstellung der Sonden haben sich unterschiedliche Verfahren etabliert, die entweder auf der Ätzung von einkristallinem Silizium basieren oder auf dünnen Schichten bevorzugt.aus SiliziumNitrid.

Ein wesentlicher Nachteil der Rastersondenmikroskopie insgesamt ist die geringe Geschwindigkeit der Analyse, da die Sonde Punkt für Punkt über die Oberfläche gerastert wird. Die Geschwindigkeit der Rasterung ist hierbei einerseits durch den Rastermechanismus selbst aber auch durch die Resonanzfrequenz des Federbalkens der Sonde begrenzt. Aktuelle Entwicklungen auf dem Gebiet der Rastersondenmikroskopie adressieren diesen Umstand durch die Entwicklung neuartiger Systeme und Sonden, die mit deutlich höherer Geschwindigkeit arbeiten.

Um bei den Sonden für solche schnellen Rastersondenmikroskope die notwendige Erhöhung der Resonanzfrequenz zu erzielen, ohne gleichzeitig die Steifigkeit des Federbalkens zu verändern, muss der Federbalken in allen Dimensionen deutlich verkleinert werden. Typischerweise ist die Länge dieser hochfrequenten Federbalken unter 20 $\mu$m, ihre Breite unter 5 $\mu$m und ihre Dicke deutlich unter 1 $\mu$m und damit zumindest in Länge und Dicke etwa um einen Faktor 10 kleiner als zurzeit übliche Federbalken von SPM-Sonden.

Diese Reduktion der Abmessungen stellt insbesondere an die Reproduzierbarkeit von Länge und Dicke des Federbalkens hohe Anforderungen, die von den üblicherweise eingesetzten Verfahren für die Herstellung von SPM-Sonden nicht erfüllt werden. Während es für die Verringerung der Dickenschwankungen bereits zahlreiche Ansätze basierend auf Ätzstopp-Techniken mit Hilfe von zusätzlichen Zwischenlagen im Ausgangsmaterial (z. B. "silicon-on-insulator"-Substrate, implantierte Zwischenschichten, etc.) gibt, sind die bisher vorgeschlagenen Lösungen für eine definierte Länge des Federbalkens unzureichend. Die üblicherweise verwendete Methode der Definition der Federbalkenlänge durch eine Seitenflanke des Halteelementes ist aufgrund des großen vertikalen Abstandes zwischen der Ausgangsebene der Ätzung und dem Federbalken sehr ungenau. Schwankungen in der Neigung der Ätzflanke und bzw. oder Schwankungen der Gesamtdicke des Ausgangsmaterials führen zu erheblichen Variationen der Federbalkenlänge, die für kurze Federbalken nicht mehr akzeptabel sind. Auch bei Montage von Federbalken auf ein separat hergestelltes Halteelement, z.B. durch anodisches Bonden, sind die Schwankungen der Montage zu groß für die anvisierten Balkengrößen, so dass das Verfahren bei sehr kleinen Federbalken nicht angewendet werden kann.

Ein üblicher Lösungsansatz für diese Problematik ist, die Gestaltung des Federbalkens mit einer deutlichen Verbreiterung, die in der Regel die Breite des eigentlichen Federbalkens um ein Vielfaches übersteigt. Ziel dieser Formgebung ist es, einen quasi aus einem lithographischen Definitionsschritt bestimmten Federbalken zu realisieren, der an einem kurzen, sehr breiten Überhang (der oben erwähnten Verbreiterung) befestigt ist. Die Toleranzen des Halteelement-ÄtzProzesses sollen damit von dem eigentlichen Federbalken auf die Länge dieses Überhangs verlagert werden. Tatsächlich hat aber die Länge des Überhangs, an dem der eigentliche Federbalken hängt, einen großen Einfluss auf die Schwingungseigenschaften des Gesamtfederbalkens, die somit wieder erheblich von den Toleranzen des Halteelement-Ätzprozesses abhängen. Die als Alternative bekannte Verfahren zur nachträglichen Formgebung des Federbalkens mittels Abtrag durch fokussierten Ionenstrahl führen zwar zum Ziel, sind aber aufwändige Einzelfertigungsschritte.

Neben diesen allgemein aus den geschrumpften Abmessungen resultierenden Schwierigkeiten für die Herstellung solcher SPM-Sonden mit Federbalken und integrierter Abtastspitze verschärft sich bei den kurzen Federbalken erheblich das Problem eines versehentlichen Aufsetzens des Halteelements anstelle der Abtastspitze. Die Sonden werden üblicherweise in einem flachen Winkel von typisch 8 bis 15 Grad zur Oberfläche der zu untersuchenden Probe in dem Rastersondenmikroskop montiert. Dadurch befindet sich das Halteelement der Sonde im Bereich des Federbalken-Befestigungspunktes sehr nahe an der Probenoberfläche, so dass die Ecken des Halteelementes bei leichter seitlicher Verkippung der Sonden um wenige Grad auf der Probenoberfläche aufsitzen können. Dies würde die vorgesehene Funktion verhindern und eventuell sogar die zu untersuchende Probe beschädigen. Um dies zu verhindern, wird bei den zurzeit üblichen Sonden das Halteelement derart gefertigt, dass auf der Seite der Einspannung des Federbalkens eine möglichst kurze Kante entsteht, so dass der aus Länge des Balkens, der Höhe der Abtastspitze und dem Montagewinkel der Sonde resultierende Abstand ausreicht, um auch bei leichter Verkippung der Sonde ein Aufsetzen der Halteelementecken zu vermeiden.

Die am häufigsten verwendete Ausführungsform sind abgeschrägte Ecken des Halteelementes, die zu einer kurzen Kante am Federbalken führen; bei gleichzeitig sichergestellter Handhabbarkeit der Gesamtsonde durch eine deutlich größere Breite des eigentlichen Haltelementes. Die Herstellung dieser beschriebenen kurzen Kante des Halteelementes unterliegt bei den üblicherweise eingesetzten Herstellungsverfahren wie dem nasschemischen anisotropen Tiefenätzen erheblichen Schwankungen, so dass sich diese Formgebung nicht ohne weiteres auf den Fall der kleineren Federbalken und der damit notwendigen deutlichen Verkleinerung der Halteelementkante übertragen lässt. Auch Alternativerfahren, wie das Sägen der Seitenflanken des Halteelementes stoßen an Ihre Grenzen, da sich hiermit nur Flanken realisieren lassen, die parallel zur Federbalkenrichtung orientiert sind. Bezüglich Verkippung hinreichend schmal gesägte Haltelemente sind aufgrund ihrer geringen Breite aber nicht mehr handhabbar.

Der vorliegenden Erfindung liegt daher die Aufgabe zugrunde, eine SPM-Sonde mit kurzem Federbalken vorzuschlagen, bei dem die Ecken des Halteelementes oder der kurzen Kante an der der Federbalken angeordnet ist, bei seitlicher Verkippung der Sonde um wenige Grade nicht auf der Oberfläche der Probe aufsitzen können. Weitere Aufgabe der Erfindung ist es, ein Verfahren zur Herstellung der vorgeschlagenen SPM-Sonde zu schaffen.

Diese Aufgaben werden erfindungsgemäß durch eine SPM-Sonde mit den Merkmalen des Anspruchs 1 sowie durch ein Verfahren zu deren Herstellung mit den Merkmalen des Anspruchs 13 gelöst.

Grundgedanke der Erfindung ist es, dem Halteelement eine besondere Form zu geben, bei der der seitliche Abstand der Abtastspitze zu den Längsseitenkanten der nächstliegenden Halteelementoberfläche gegenüber herkömmlichen Sonden deutlich reduziert und/oder der Abstand zwischen der die Abtastspitze tragenden Federbalkenoberseite und der zugeordneten Halteelementoberfläche gegenüber den üblichen Sonden deutlich vergrößert ist.

Die erfindungsgemäße SPM-Sonde weist ein längliches Halteelement mit einer im wesentlichen trapezförmigen Querschnittsform auf, wobei der Federbalken an einer vorderen Stirnseite des Halteelements an einer Querkante, vorzugsweise an der breiten Querkante angeordnet ist. Unter einer im wesentlichen trapezförmigen Querschnittsform werden auch rechteckige und/oder stufenförmige Querschnitte verstanden. Dabei bildet eine von der Abtastspitze und einer gedachten, sich durch eine der Querkante zugeordneten kritischen Ecke parallel zu den seitlichen Längskanten der Haltelementunterseite erstreckenden geraden Linie aufgespannte Ebene gegenüber der Querkante mindestens einen Neigungswinkel von 5 Grad. Unter kritischer Ecke wird dabei diejenige Ecke verstanden, die der Probe beim Abtasten am nächsten liegt. Sind an der vorderen Querkante beidseitig des Federbalkens je zwei Ecken, beispielsweise in Form einer Fase ausgebildet, so gilt als kritische Ecke diejenige Ecke, die den geringsten Abstand zu dem Federbalken aufweist und als erstes auf der Probenoberfläche aufsetzen würde. Zusätzlich kann eine Verbreiterung des Halteelementes von der vorderen Stirnseite der Sonde mit dem Federbalken zu der gegenüber liegenden hinteren Stirnseite der Sonde hin sinnvoll sein, um die Handhabbarkeit der Sonde zu verbessern. Damit kann die Sonde bis zu 5 Grad seitlich verkippt werden, ohne dass die der Probe zugewandte Querkante des Halteelements die Probenoberfläche berührt, womit eine Beschädigung der Probe weitgehend ausgeschlossen ist.

In einer vorteilhaften Ausführungsform der Erfindung weist das Halteelement eine längliche Erhebung auf, die sich in Längsrichtung des Halteelementes und des Federbalkens erstreckt. Dabei ist zumindest die Erhebung mit einer im wesentlichen trapezförmigen oder rechteckigen Querschnittsform ausgebildet und der Federbalken stirnseitig an der schmalen Querkante der Erhebung des Haltelements angeordnet.

Durch Realisierung der Erhebung auf dem Halteelement, an deren schmäleren Ende der Federbalken fixiert ist und deren Höhe die mögliche seitliche Verkippung der Sonde ausgleicht, kann das Aufsetzen des Halteelementes auf der Probenoberfläche, insbesondere bei kleinen kurzen Federbalken sicher vermieden werden. Durch die Verlagerung der Definition der Kante mit der kritischen Ecke des Halteelementes von der hinteren Halteelementseite auf die vordere Halteelementseite, an der sich der Federbalken befindet, ist eine einfachere und insbesondere reproduzierbarere Fertigung möglich.

Die typisch maximal möglichen Verkippungen durch Fertigungstoleranzen des SPM-Messsystems und durch die Toleranzen der Sonden-Montage liegen in einer Größenordnung von bis zu 5 Grad. Ein Aufsetzen der Halteelementkante auf die Probenoberfläche bei einer solchen Verkippung kann sicher vermieden werden, wenn für die Höhe der Erhebung bzw. des daran befestigten Federbalkens H bezogen auf die Länge der Halteelementkante L gilt:

$$\tan(5°)\cdot\frac{L}{2} < H$$

Daraus ergibt sich näherungsweise:

$$H > \frac{1}{20}L$$

Bevorzugt wird eine Ausführungsform des erfindungsgemäßen SPM-Sensors, bei der der vertikale Abstand zwischen der Federbalkenunterseite, die die Abtastspitze trägt, und der Halteelementunterseite, die die Erhebung trägt, mindestens 1/20 der Breite der Querkante des Halteelementes beträgt, an der die Erhebung mit dem daran befestigten Federbalken angeordnet ist.

Vorteilhafterweise ist das Ausgangsmaterial für das Halteelement und den Federbalken einkristallines Silizium und zumindest die Stirnseitenflanke des Halteelements, an dem der Federbalken befestigt ist, aus einer <111 >-Ebene des Siliziumkristalls gebildet. Es ist weiterhin vorteilhaft, wenn das Ausgangsmaterial eine integrierte Ätzstoppschicht aufweist, um die Dicke des Federbalkens zu definieren.

In einer anderen bevorzugten Ausführung des SPM-Sonde besteht das Halteelement einschließlich der Erhebung aus einem und der Federbalken aus einem zweiten Material. Dabei kann als Material für das Halteelement und die Erhebung Glas oder Silizium und für den Federbalken ein amorpher Dünnfilm vorgesehen sein.

In einer anderen Ausführungsform der Erfindung bestehen das Halteelement, die Erhebung und der Federbalken aus jeweils unterschiedlichen Materialien. Das Material für das Halteelement kann Glas, für die Erhebung Silizium und für den Federbalken einen amorphen Dünnfilm aufweisen.

Bei einer Ausführung der Erfindung können die seitlichen Flanken des Halteelementes und die seitlichen Flanken der Erhebung eine identische Neigung aufweisen und vorzugsweise stufenlos aneinander anschließen, Bevorzugt wird außerdem eine Ausführungsform der Erfindung, bei der zumindest die Stirnseitenflanke, an der der Federbalken befestigt ist, eine hinterschnittene Form aufweisen. Dabei ist es außerdem von Vorteil, wenn die seitlichen Längsseitenflanken des Halteelements vorzugsweise in Richtung des Federbalkens aufeinander zulaufen.

Bei einer solchen Ausführungsform ist die Halteelementseite unterhalb des Federbalkens vorzugsweise zumindest teilweise durch eine <111 >-Ebene des Silizium-Kristalls gebildet und die <111>-Ebene herstellungsbedingt durch eine Querlinie als Stopplinie für den Ätzvorgang bestimmt, die orthogonal zur Federbalkenrichtung oberhalb der federbalkenseitigen Unterseite des Halteelements verläuft.

Gemäß dem erfindungsgemäßen Verfahren kann die erfindungsgemäße SPM-Sonde aus einem Stück hergestellt oder zumindest der Federbalken zunächst separat gefertigt und anschließend mit dem Halteelement, und wenn vorhanden, vorzugsweise mit dessen Erhebung verbunden werden. Dabei kann das Halteelement, falls es eine Erhebung aufweist, einstückig gefertigt oder aus zwei zusammengefügten Teilen bestehen.

Das erfindungsgemäße Verfahren weist vorteilhafterweise mindestens die zwei folgenden Prozessschritte auf. Zuerst wird die Form des Federbalkens und des Halteelements, mit oder ohne Erhebung, durch Ätzschritte von einer ersten Materialseite des Ausgangsmaterials her gebildet. Danach wird die Dicke des Federbalkens durch Ätzen von der anderen gegenüberliegenden zweiten Materialseite des Ausgangsmaterials her eingestellt. Dabei werden vorzugsweise die seitlichen Längsseitenflanken des Halteelementes von einer ersten Materialseite des Ausgangsmaterials und die Stirnseitenflanke, an der der Federbalken befestigt ist, von der anderen zweiten Materialseite des Ausgangsmaterials her herausgearbeitet.

Bei einem vorteilhaften Verfahrensablauf erfolgt nach dem Herausarbeiten der Längsseitenflanken des Halteelementes und/oder der Erhebung sowie der Federbalkenform durch anisotropes Ätzen von einer ersten Materialseite des Ausgangsmaterials her und dem Abdecken der jeweiligen Materialseite des Ausgangsmaterials einschließlich der geätzten Strukturen mit einem ätzresistenten Schutzfilm, das Ätzen der Flanken an der vorderen und der hinteren Stirnseite der Sonde des Halteelements von der anderen Materialseite her. Insbesondere wird dabei die vordere Stirnseitenflanke, über die der Federbalken vorsteht, so hergestellt indem das Ätzen von der zweiten Materialseite ebenfalls mittels einem anisotropen nass-chemischen Verfahren erfolgt und der Schutzfilm nach dem Ätzvorgang selektiv entfernt wird.

Bevorzugt erfolgt die Herstellung der SPM-Sonde mit den folgenden Verfahrensschritten, bei der zunächst der Federbalken aus der Silizium-Schicht oberhalb des Ätzstopps auf der ersten Materialseite der Silizium-Scheibe herausgearbeitet wird. Dann wird die erste Materialseite der Silizium-Scheibe einschließlich der geätzten Strukturen mit einem ätzresistenten Schutzfilm abgedeckt, anschließend ein Fenster in dem ätzresistenten Schutzfilm geöffnet, das den Federbalken ausschließt und gleichzeitig eine Ätzstopplinie des Halteelementes definiert, die die Länge des Federbalkens bestimmt. Danach wird mittels einem nasschemischen anisotropen Verfahren das Silizium innerhalb des geöffneten Fensters derart geätzt, dass der Federbalken durch Unterätzen vollständig freigelegt und unterhalb des Federbalkens eine <111>-Fläche des Silizium-Kristalls ausbildet wird. Anschließend wird mittels einem nasschemischem anisotropen Verfahren das Halteelement von der zweiten Materialseite der Silizium-Scheibe derart herausgearbeitet, dass sich eine <111>-Fläche des Silizium-Kristalls als Flanke des Ätzprozesses ausbildet, die auf die zuvor von der gegenüberliegenden ersten Materialseite der Silizium-Scheibe ausgebildeten <111>-Oberfläche unterhalb des Federbalkens trifft. Das nasschemische anisotrope Ätzverfahren wird fortgesetzt, um zumindest in einem Bereich unterhalb des Federbalkens eine neue <111>-Fläche mit hinterschnittenem Flankenprofil auszubilden, wobei der schnelle Ätzangriff auf die offen liegende Fläche zwischen den beiden von Vorder- und Rückseite geätzten <111>-Flächen ausgenutzt wird. Abschließend wird der Schutzfilm selektiv entfernt.

Zweckmäßig für die Ausbildung der Erhebung ist es außerdem, dass nach dem Entfernen des Schutzfilms ein weiterer Schutzfilm auf die Rückseite der Silizium-Scheibe einschließlich der Ätzflanken aufgebracht wird und danach mittels einem anisotropen Ätzverfahren von der Vorderseite der Silizium-Scheibe die Erhebung, die den Federbalken mit einschließt, aus dem Halteelement herausgearbeitet wird. Anschließend wird der neue Schutzfilm wiederum selektiv entfernt.

Nachfolgend wird die Erfindung in Verbindung mit den begleitenden Zeichnungen anhand unterschiedlicher Ausführungsbeispiele näher erläutert. Weitere Merkmale der Erfindung ergeben sich aus der Zeichnung und deren Beschreibung in Verbindung mit den Ansprüchen. Die einzelnen Merkmale können für sich allein oder kombiniert bei verschiedenen Ausführungsformen der Erfindung realisiert sein.

In einer schematischen Darstellung zeigen:

Figur 1      einen ersten erfindungsgemäßen SPM-Sensor mit Erhebung;

Figur 2      eine simultane Formgebung des Federbalkens und der Erhebung für den Sensor gemäß Figur 1 bei einem Ausgangsmaterial ohne Ätzstoppschicht;

Figur 3      eine serielle Formgebung des Federbalkens und der Erhebung für den Sensor gemäß Figur 1, bei einem Ausgangsmaterial ohne Ätzstoppschicht;

Figur 4      eine serielle Formgebung von Federbalken und Erhebung für den Sensor gemäß Figur 1, bei einem Ausgangsmaterial mit Ätzstoppschicht;

Figur 5      eine getrennte Herstellung und Formgebung von Halteelement, Erhebung und Federarm mit anschließendem Zusammenfügen für den Sensor gemäß Figur 1;

Figur 6      eine getrennte Herstellung und Formgebung von Halteelement und Erhebung mit Federbalken mit anschließendem Zusammenfügen für den Sensor gemäß Figur 1;

Figur 7      eine zweite erfindungsgemäße SPM-Sonde, bei dem die seitlichen Längsflanken des Halteelementes und der Erhebung stufenlos mit identischer Neigung aneinander anschließen;

Figur 8      einen Herstellungsablauf für die zweite erfindungsgemäße SPM-Sonde mit geneigten Flanken gemäß Figur 7, beginnend mit der Formgebung von der Oberseite des Ausgangsmaterials her;

Figur 9      einen anderen Herstellungsablauf für die zweite SPM-Sonde gemäß Figur 7, beginnend mit der Formgebung von der Unterseite des Ausgangsmaterials her;

Figur 10      eine dritte erfindungsgemäße SPM-Sonde mit hinterschnittenen Flanken;

Figur 11      einen Herstellungsablauf für die Formgebung der SPM-Sonde gemäß Figur 10;

Figur 12      eine vierte erfindungsgemäße SPM-Sonde mit hinterschnittenen Seitenflanken und mit Erhebung; und

Figur 13      einen Herstellungsablauf für die Formgebung der SPM-Sonde aus Figur 12.

In der Beschreibung der Ausführungsbeispiele beziehen sich die Begriffe oben, unten, Oberseite, Unterseite und dergleichen auf eine übliche Gebrauchslage der SPM-Sonde, bei der der Federarm von oben eine darunter befindliche Probe mit einer nach unten gerichteten Abtastspitze abtastet. In den Figuren ist die Sonde zur Darstellung von sonst verdeckten Details entgegen der Gebrauchslage mit nach oben weisender Abtastspitze abgebildet.

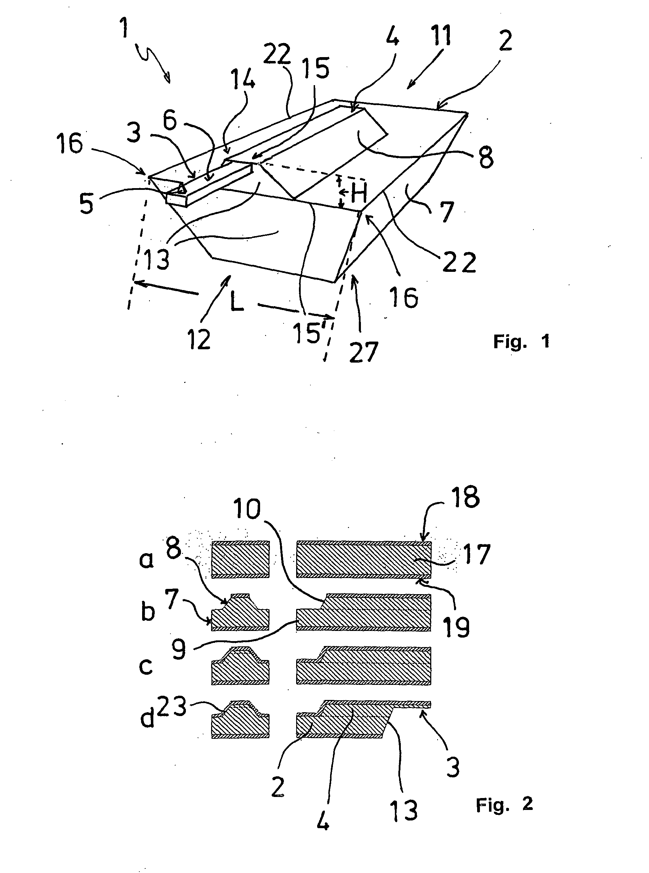

Figur 1 zeigt eine SPM-Sonde 1 mit einem Halteelement 2, bei dem der Federbalken 3 von einer länglichen Erhebung 4 ausgeht, die von dem Halteelement 2 getragen ist. Der Federbalken 3 trägt wie üblich entfernt von dem Halteelement 2 eine Abtastspitze 5 an einer Federbalkenunterseite 6. Das Halteelement 2 weist seitlich Längsseitenflanken 7 und die Erhebung 4 Längsseitenflanken 8 auf, sowie hintere Querseitenflanken 9, 10 die jeweils zwei Längsseitenflanken 7 bzw. 8 verbinden. Den Querseitenflanken 9, 10 an der hinteren Stirnseite 11 der Sonde 1 liegt auf der vorderen Stirnseite 12, über die der Federarm 3 vorsteht, eine gemeinsame vordere Stirnseitenflanke 13 gegenüber. Die Erhebung 4 tritt aus einer Halteelementunterseite 14 des Halteelementes 2 hervor und ist mit gleichem seitlichen Abstand zu dessen Längsseitenkanten 22 ausgerichtet. Die durch die Erhebung 4 bedingte erhöhte Position des Federbalkens 3 gegenüber der Unterseite 14 des Halteelementes 2 gleicht die mögliche seitliche Verkippung der SPM-Sonde 1 aus.

Das Halteelement 2 und die Erhebung 4 der SPM-Sonde 1 weisen eine trapezförmige Querschnittsform auf, wobei der Federbalken 3 an einer vorderen schmalen unteren Querkante 15 der vorderen Stirnseitenflanke 13 an der Erhebung 4 angeordnet ist. Die Erhebung 4 liegt mittig zu den vorderen Ecken 16 des Halteelementes 2, die durch die breitere Querkante 15' verbunden sind, wobei sich die längliche Erhebung 4 in Längsrichtung des Halteelementes 2 und des Federbalkens 3 über einen Teil der Länge des Halteelementes 2 erstreckt. Dabei kann die Form der Sonde 1 sowohl durch eine simultane lithographische Definition von Federbalken 3 und Erhebung 4 und Halteelement 2 als auch durch voneinander unabhängige Fertigung in getrennten Schritten erfolgen.

Im ersteren Fall würden typischerweise die Erhebung 4 und der Federbalken 3, wie in den Figuren 2a bis 2d in Front- und Seitenansicht dargestellt, an der Unterseite 14 des Halteelementes 2 zusammen aus dem Ausgangsmaterial 17 von einer ersten Materialseite 18 her herausgearbeitet und der Federbalken 3 anschließend von anderen zweiten Materialseite 19, eventuell zusammen mit der Fertigung des eigentlichen Halteelements 2, auf die Solldicke abgedünnt, wobei die zweite Materialseite 19 des Ausgangsmaterials 17 die Oberseite 27 des Halteelementes 2 bildet.

Auch in den weiteren Figuren ist der ersten Materialseite 18 die Unterseite 14 und der zweiten Materialseite 19 die Oberseite 27 des Halteelementes 2 zugeordnet.

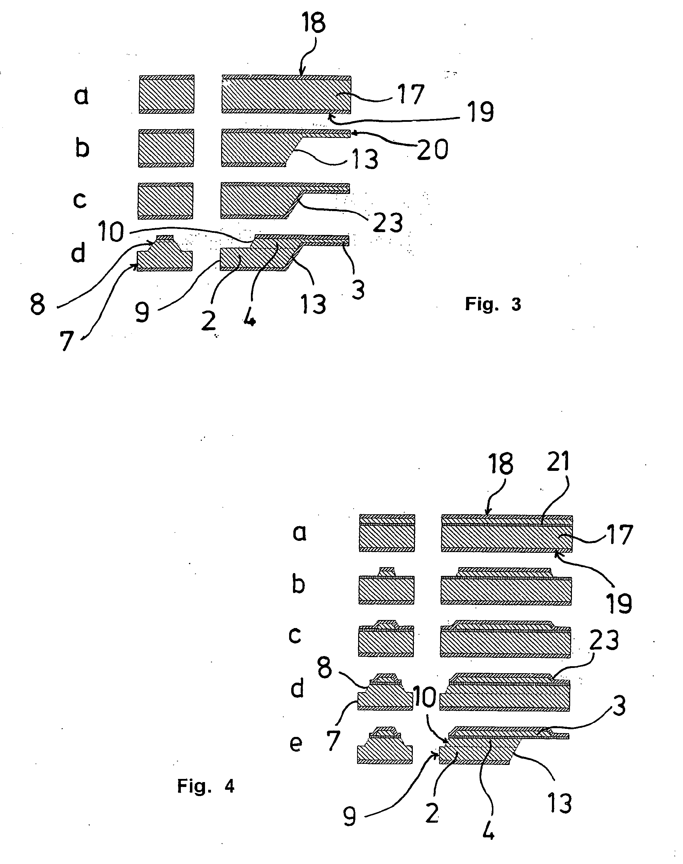

Alternativ kann, wie in den Figuren 3a bis 3d in den gleichen Ansichten gezeigt, aber auch die Definition der Dicke des Federbalkens 3 vor der Fertigung von der Erhebung 4 und des Federbalkens 3 durch Realisierung einer dünnen Membrane 20 realisiert werden (Figuren 3a, b). Federbalken 3 und Erhebung 4 werden anschließend aus der Membrane 20 und dem massiven Ausgangsmaterial 17 des späteren Halteelementes 2 herausgearbeitet (Figuren 3c, d).

Im Fall der separaten Fertigung werden Federbalken 3 und Erhebung 4 in zwei voneinander getrennten Arbeitsschritten realisiert. Üblicherweise würde zunächst die Form des Federbalkens 3 aus dem Ausgangsmaterial 17 von einer ersten Materialseite 18 herausgearbeitet, anschließend geschützt und um den Federbalken 3 herum die Erhebung 4 herausgearbeitet. Eine .Umkehrung dieser Reihenfolge ist aber ebenfalls denkbar. Wie bei der oben beschriebenen Variante der simultanen Fertigung kann die Dicke des Federbalkens 3 entweder durch nachträgliches oder vorheriges Abdünnen des Ausgangsmaterials 17 von der zweiten Materialseite 19 aus realisiert werden.

Bei Verwendung von einkristallinem Silizium als Ausgangsmaterial 17 für die Fertigung der Sonde 1 erfolgt das Herausarbeiten von Erhebung 4 und Federbalken 3 aus der ersten Materialseite 18 durch Ätzen gemäß einem der bekannten üblichen nass- oder trockenchemischen anisotropen Ätzverfahren. Das Abdünnen des Materials 17 von der gegenüberliegenden zweiten Materialseite 19 her erfolgt ebenfalls durch nasschemisches anistropes Ätzen, da hierbei unter Ausnutzung der Kristallstruktur die geneigte Stirnseitenflanke 13 erzeugt wird, die in der Anwendung der Sonden 1, bei der üblicherweise ein Laserstrahl auf den Federbalken 3 fokussiert wird, den Vorteil einer besseren Zugänglichkeit bietet. Anisotrope, trockenchemische Verfahren mit üblicherweise senkrechten Wänden sind aber ebenfalls denkbar.

Ein Sonderfall der getrennten Fertigung von Erhebung 4 und Federbalken 3 ergibt sich aus der Nutzung eines Ausgangsmaterials 17 mit integrierter Ätzstoppschicht 21, wie in den Figuren 4a bis 4f skizziert. Im Falle des einkristallinen Siliziums kann ein solcher Ätzstopp 21 zum Beispiel durch eine integrierte Siliziumdioxid-Schicht (so genannte silicon-on-oxide- oder SOI-Substrate) oder durch Implantation von hohen Konzentrationen von Bor erzeugt werden. Eine solche integrierte Ätzstoppschicht 21 lässt sich nutzen, um die Dicke des Federbalkens 3 mit hoher Präzision einzustellen, indem der Federbalken 3 aus der dünnen, mit extrem homogener Dicke herstellbaren Schicht über der Ätzstoppschicht 21 realisiert wird, während das Halteelement 2 im wesentlichen aus dem restlichen Ausgangsmaterial 17 unterhalb der Ätzstoppschicht 21 gefertigt wird. Bei der oben beschriebenen Abdünn-Prozedur verhindert der Ätzstopp 21 eine Vergrößerung der Variation der Federbalkendicke. Die Realisierung der oben beschriebenen Erhebung 4 zu Reduzierung der Gefahr eines Aufsetzens des Halteelements 2 auf der Probe mittels zweistufigem Verfahren bleibt davon unberührt.

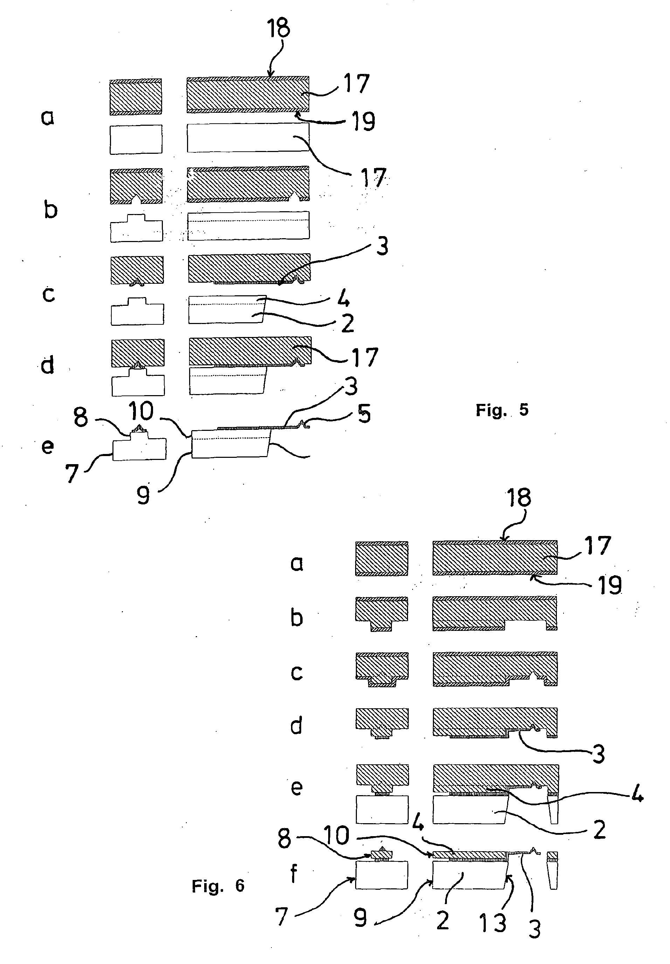

Im Falle von Sonden 1, die nicht durch Herausarbeiten aus einem einheitlichen Ausgangsmaterial 17, sondern durch Zusammenfügen von zuvor getrennt realisierten Federbalken 3 und Halteelementen 2 realisiert werden, kann die beschriebene Erhebung 4, wie die Figuren 5a - 5e darstellen, ebenfalls vor dem Zusammenfügen in das Halteelement 2 integriert werden. Alternativ dazu ist auch eine Fertigung der Erhebung 4 zusammen mit dem Federbalken 3 möglich, wobei die Erhebung 4 dann zusammen mit dem Federbalken 3, wie in den Figuren 6a - 6f skizziert, an das Halteelement 2 montiert wird. Bei geschickter Auswahl von Materialien und Ätzverfahren kann die Erhebung 4 auch nach dem Zusammenfügen noch aus dem Halteelement 2 heraus gearbeitet, insbesondere heraus geätzt werden.

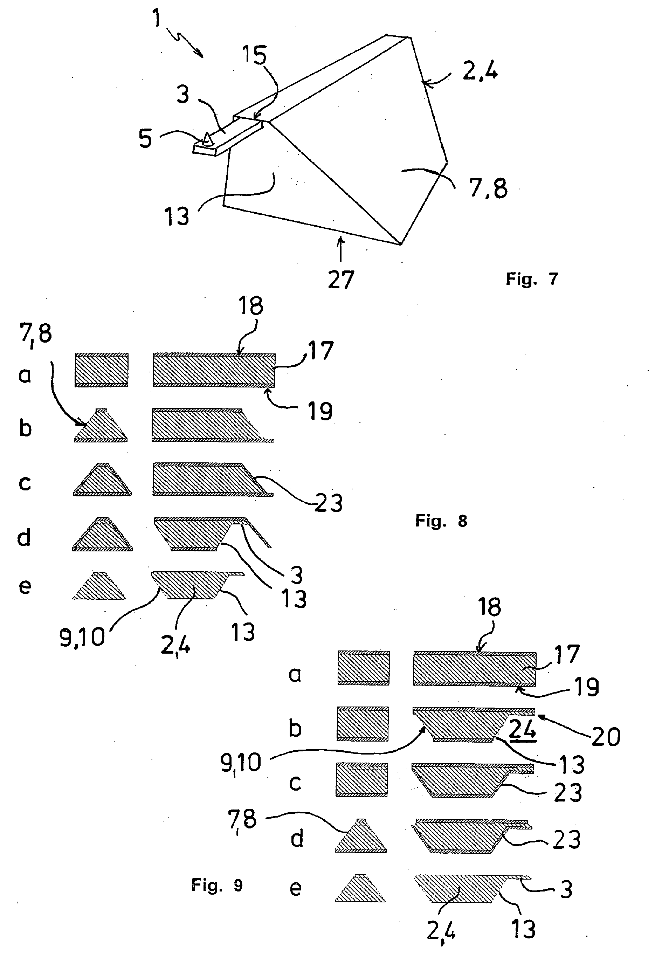

Ein anderer Sonderfall der beschriebenen Form des Halteelementes 2 mit Erhebung 4 ist die Ausbildung der Längsseitenflanken 7 des Halteelementes 2 sowie der Längsseitenflanken 8 der Erhebung 4 mit einer identischen Neigung und mit einem stufenlosen Übergang der Seitenflanken 7 zu den Seitenflanken 8, wie in der Figur 7 dargestellt. Durch diese spezielle Querschnittsform von dem Halteelement 2 und der Erhebung 4 werden auch erhebliche Verkippungen der Sonde 1 möglich, wie sie für manche Anwendungen der Rastersondenmikroskopie notwendig sind, ohne die Gefahr eines Aufsetzens des Halteelementes 2 auf die Probenoberfläche. Die Längsseitenflanken 7, 8 des Halteelementes 2 und der Erhebung 4 der Sonde 1 schließen direkt fluchtend aneinander an. Das Halteelement 2 hat gemäß Figur 7 einen trapezförmigen Querschnitt und einen zu dem Querschnitt umgekehrten, im wesentlichen trapezförmigen Längsschnitt.

Eine wesentliche Herstellungsart für das Halteelement 2 gemäß Figur 7, mit der geneigten Stirnseitenflanke 13 ist die Fertigung einer entsprechenden SPM-Sonde 1 aus einkristallinem Silizium. Zunächst wird mittels anisotropem nass-oder trockenchemischen Ätzen eine Erhebungs- und Federbalken-Struktur 4, 3 aus dem Ausgangsmaterial 17 von einer ersten Materialseite 18 her herausgearbeitet, wobei der Abtrag gemäß den Darstellungen 8a, b bis zu gegenüber liegenden zweiten Materialseite 19 des Ausgangsmaterials 17 unter Ausbildung der seitlichen ineinander übergehenden seitlichen Flanken 7, 8 des Halteelementes 2 erfolgt. Anschließend wird die geätzte Struktur mit einer geeigneten Schutzschicht 23, wie zum Beispiel mit einem Siliziumdioxid- oder Siliziumnitrid-Dünnfilm, als Abdeckung geschützt und anschließend die vordere Stirnseite 5 und die dieser gegenüberliegende hintere Stirnseite 11 der Sonde 1 geätzt. Dabei wird insbesondere die fehlende vordere Stirnseitenflanke 13 des Halteelementes 2 von der zweiten Materialseite 19 des Ausgangsmaterials 17 ausgehend, wie in den Figuren 8d, e gezeigt, herausgearbeitet. Durch rechtzeitiges Stoppen des Ätzvorgangs, mit oder ohne Ätzstopp, lässt sich in diesem Schritt die Dicke des Federbalkens 3 einstellen.

Prinzipiell ist die Vorgehensweise auch umkehrbar. In diesem Fall wird zunächst die vordere Stirnseite 12 und die hintere Stirnseite 11 des Sonde 1 von der zweiten Materialseite 19 her geätzt. Dabei werden im Ausgangsmaterial 17 unter dem späteren Federbalken 3 und an der hinteren Stirnseite 11 des Ausgangsmaterials 17 Gruben 24 geätzt, siehe Figuren 9a, b, so dass Membranen 20 entstehen, deren Dicke der späteren Dicke der Federbalken 3 entspricht. Anschließend werden diese Gruben 24 durch eine adäquate Schutzschicht 23 in Form eines Films gemäß der Figur 9c geschützt und die Erhebung 4 von der gegenüber liegenden ersten Materialseite 18 aus geätzt, sodass aus der Membran 23 der Federbalken 3 gebildet wird, und die Längsseitenflanken 7, 8 der Erhebung 4 und des Halteelementes 2, wie die Figuren 9d, e zeigen, entstehen.

Ein wesentlicher Vorteil dieses Verfahrens mit getrennter Ausformung der seitlichen Längsseitenflanken 7, 8 und der wichtigen Stirnseitenflanke 13 von unterschiedlichen ersten bzw. zweiten Materialseiten 18, 19 ist, dass bei Nutzung von anisotropem nasschemischem Silizium-Ätzen keine offnen Ecken entstehen. Dadurch sind, im Gegensatz zu herkömmlichen Verfahren mit Strukturierung des Halteelementes 2 und der Erhebung 4 von nur einer Materialseite 18, 19 des Ausgangsmaterials 17 her, auch die Ecken 16 des Halteelementes 2 exakt durch die langsam ätzenden <111>-Flächen des Silizium-Einkristalls definiert.

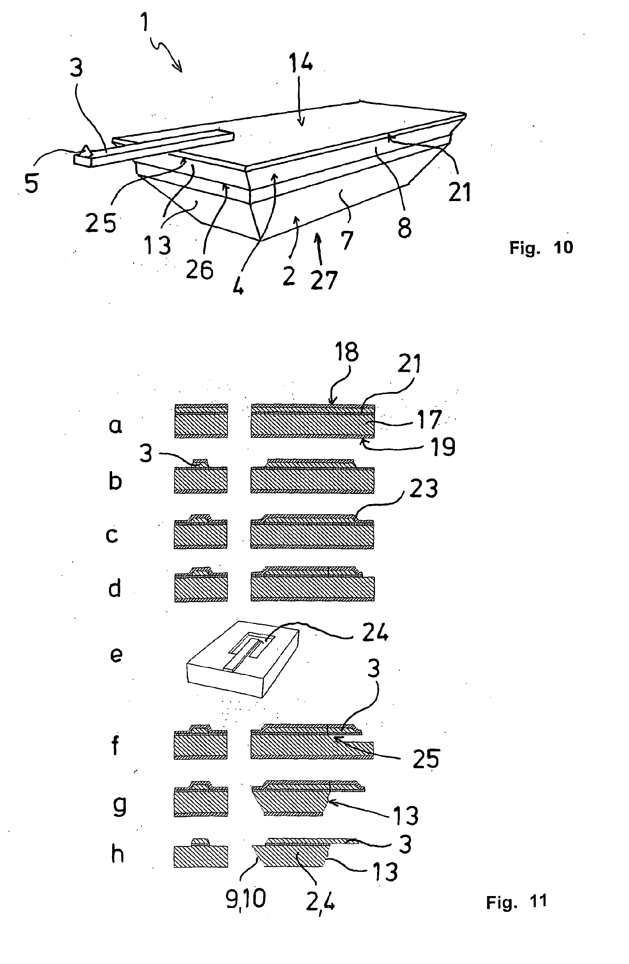

Eine präzise, homogene und reproduzierbare Definition der Länge des Federbalkens 3 wird erfindungsgemäß bei einer Sonde 1 gemäß Figur 10 durch eine lithographische Strukturierung des Übergangs zwischen Federbalken 3 und Halteelement 2 von der gleichen ersten Materialseite 18 des Ausgangsmaterials 17 erzielt.

Der Federbalken 3 wird dabei, wie in der Oberflächenmikromechanik üblich, durch laterales Unterätzen des maskierten Federbalkens 3 frei gelegt. Anschließend erfolgt das eigentliche Herausarbeiten des Halteelementes 2 von der gegenüber liegenden zweiten Materialseite 19 des Ausgangsmaterials 17, bei dem auch das restlich unter dem Federbalken 3 befindliche Material des Ausgangsmaterials 17 entfernt wird.

Bei Verwendung von einkristallinem Silizium als Ausgangsmaterial 17 für das Halteelement 2 und anisotropen nasschemischen Ätzverfahren kann die extrem niedrige Ätzrate der <111>-Ebenen des Kristalls ausgenutzt werden, um die Stirnseitenflanke 13 des Halteelements 2 unter dem Federbalken 3 zu definieren. Bei geeigneter Orientierung des Silizium-Kristalls stoppt die Unterätzung des Federbalkens 3 exakt an der lithographisch neben dem Federbalken 3 definierten Stopplinie 25 senkrecht zur Federbalkenlängsachse. In der Regel wird die entstehende Ätzflanke unterhalb des Federbalkens 3 zunächst geneigt sein. Wird die folgende Ätzung von der gegenüberliegenden zweiten Materialseite 19 des Ausgangsmaterials 17 derart ausgerichtet, dass die Ätzflanke auf die zuvor von der ersten Materialseite 18 strukturierte Stirnseitenflanke 13 der Federbalkenunterätzung trifft und nach dem Zusammentreffen der Ätzflanken ausreichend überätzt, so bildet sich unterhalb des Federbalkens 3 eine hinterschnittene <111>-Kristallebene als Stirnseitenflanke 13 aus, die exakt bei der zuvor definierten Ätzstopplinie 25 neben dem Federbalken 3 endet. Die vorhandenen Ungenauigkeiten der Justage zwischen der ersten 18 und zweiten 19 Materialseite des Ausgangsmaterials 17 sowie Dickenschwankungen des Ausgangsmaterials 17 wirken sich lediglich als unterschiedlich großer Grat unterhalb einer Einschnürungskante 26 an der vorderen Stirnseitenflanke 13 des Halteelementes 2 aus. Alternativ kann das Überätzen aber auch schon unterbrochen werden, bevor sich die komplette Stirnseitenflanke 13 ausgebildet hat. Lediglich direkt unterhalb des Federbalkens 3 sollte bereits die hinterschnittene <111>-Ebene ausgebildet sein. Auf diese Weise kann eine entsprechend der Figur 10 ausgebildeter SPM-Sonde 1 mit einer hinterschnittenen Form der Stirnseitenflanke 13 erzeugt werden.

Soll der Federbalken 3 in oben beschriebenem Ausführungsbeispiel ebenfalls aus Silizium bestehen, so ist die Verwendung eines Ausgangsmaterials 17 mit integriertem Ätzstopp 21 notwendig. Der Federbalken 3 und eventuell die integrierte Abtastspitze 5 wird zunächst aus der oberen Silizium-Schicht, also von der ersten Materialseite 18 des Ausgangsmaterials 17 mittels nass- oder trockenchemischer Ätzverfahren gemäß den Abbildungen der Figuren 11a, b herausgearbeitet und anschließend mit einem geeigneten Schutzfilm 23 z.B. aus Siliziumdioxid oder Siliziumnitrid abgedeckt, wie Figur 11c zeigt. Anschließend wird lithographisch die Ätzstopplinie 25 des Halteelementes 2 definiert, wobei der Federbalken 3 ebenfalls geschützt bleiben muss, siehe Figuren 11d, e. Bei der folgenden Unterätzung des Federbalkens 3 verhindert die integrierte Ätzstoppschicht 21 einen rückseitigen Ätzangriff auf den Balken 3, wie die Figuren 11f, g, h verdeutlichen.

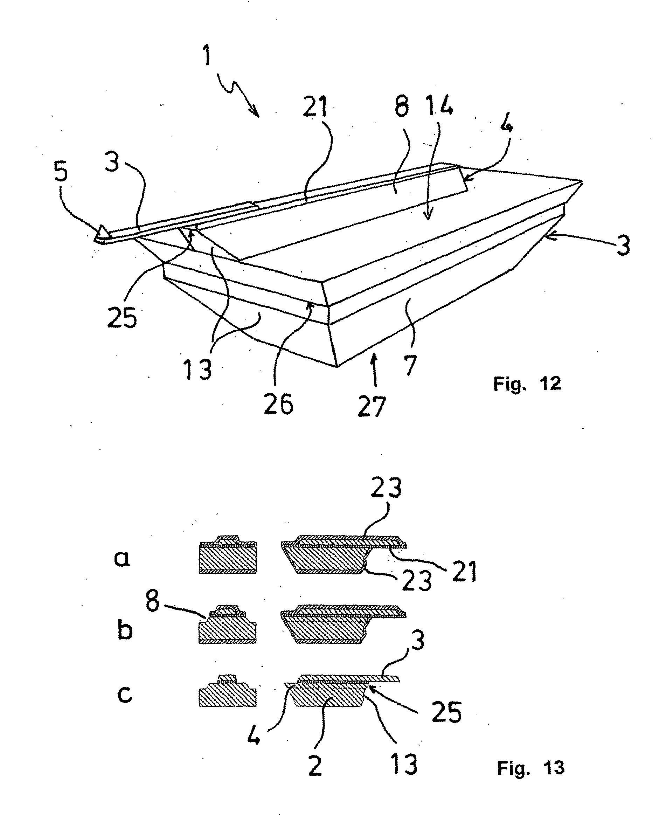

Das Verfahren zur exakten Definition der Länge des Federbalkens 3 lässt sich mit dem Konzept des Halteelementes 2 mit Erhebung 4 kombinieren (Figur 12). Hierzu muss, wie in den Figuren 13a, b gezeigt, nach der Ätzung des Federbalkens 3 von der ersten Materialseite 18 her zunächst das Fenster um den Federbalken 3 geöffnet und dieser vollständig unterätzt werden. Anschließend wird das Halteelement 2 von der zweiten Materialseite 19 aus mit ausreichender Überätzung geätzt, sodass unterhalb des Federbalkens 3 die hinterschnittene <111>-Kristallebene entsteht. Nun muss noch die zweite Materialseite 19 des Halteelementes 2 einschließlich der von dieser Seite aus geätzten stirnseitigen Flanken 9, 10, 13 mit einem angemessenen Schutzfilm 23 z.B. aus Siliziumdioxid oder Siliziumnitrid geschützt und die Erhebung 4 von der ersten Materialseite 18 aus geätzt werden. Abschließend werden die Schutzfilme 23 selektiv gemäß Figur 13c entfernt.

In den Figuren 10 und 12 sind die Ätzflächen zwischen der Ätzstopplinie 25, der Einschnürungskante 26 und der Oberseite 27 des Halteelementes 2 zueinander nicht maßstäblich dargestellt. Dabei sind die Ätzflächen unterhalb der Einschnürungskante 26, also in Richtung des Federbalkens 3, gegenüber dem Rest des Halteelementes 2 in der Höhe zur Verdeutlichung um ein Mehrfaches zu groß abgebildet. Speziell bei der Figur 12 ist die Erhebung 4 die aus dem Ausgangsmaterial 17 zwischen der Einschnürungskante 26 und der Ätzstoppschicht 21 herausgearbeitet, sodass der Abstand der Einschnürungskante 26 von der Ätzstoppschicht 21 bei den beiden in den Figuren 10, 12 dargestellten Ausführungsbeispielen im wesentlichen gleich ist. Unter der Stirnseitenflanke 13 sind alle stirnseitigen Ätzflächen zusammengefasst, die sich von der Oberseite 27 des Halteelementes 2 bis zu der Ätzstoppschicht 21 erstrecken.

**Patentansprüche**

1. SPM-Sonde (1), mit einem länglichen Halteelement (2) und mit einem über das Halteelement (2) stirnseitig vorstehenden, eine Abtastspitze (5) tragenden Federbalken (3), der an einer vorderen Stirnseite (12) der Sonde (1) angeordnet ist und dort aus einer vorderen Stirnseitenflanke (13) hervortritt , **dadurch gekennzeichnet, dass** das Halteelement (2) eine im wesentlichen trapezförmige Querschnittsform aufweist, wobei der Federbalken (3) vorzugsweise an einer Querkante (15, 15') der Stirnseitenflanke (13) angeordnet ist und die von einer gedachten, sich durch eine der Querkante (15') zugeordneten kritischen Ecke (16) parallel zu den seitlichen Längsseitenkanten (22) der Halteelementunterseite (14) erstreckende gerade Linie und der Abtastspitze (5) aufgespannte Ebene gegenüber der Querkante (15') mindestens einen Neigungswinkel von 5 Grad aufweist.

2. SPM-Sonde, nach Anspruch 1, **dadurch gekennzeichnet, dass** das Halteelement (2) eine längliche Erhebung (4) aufweist, die sich in Längsrichtung des Halteelementes (2) und des Federbalkens (3) erstreckt, wobei zumindest die Erhebung (4) mit einer im wesentlichen trapezförmigen Querschnittsform ausgebildet ist und der Federbalken (3) stirnseitig an der schmalen Querkante (15) der Erhebung (4) des Halteelementes (2) angeordnet ist.

3. SPM-Sonde nach Anspruch 2, **dadurch gekennzeichnet, dass** der vertikale Abstand H zwischen der Federbalkenunterseite (6), die die Abtastspitze (5) trägt, und der Halteelementunterseite (14), die die Erhebung (4) trägt, mindestens 1/20 der Breite L der Querkante (15') des Halteelementes (2) beträgt, an der die Erhebung (4) mit dem daran befestigten Federbalken (3) angeordnet ist.

4. SPM-Sonde nach einem der vorangegangenen Ansprüche, **dadurch gekennzeichnet, dass** das Ausgangsmaterial (17) für das Halteelement (2) und den Federbalken (3) einkristallines Silizium ist und zumindest die Stirnseitenflanke (13) des Halteelementes (2), an dem der Federbalken (3) befestigt ist, aus einer <111>-Ebene des Siliziumkristalls gebildet ist.

5. SPM-Sonde nach Anspruch 4, **dadurch gekennzeichnet, dass** als Ausgangsmaterial (17) eine integrierte Ätzstoppschicht (21) aufweist, um die Dicke des Federbalkens (3) zu definieren.

6. SPM-Sonde nach Anspruch 2, **dadurch gekennzeichnet, dass** das Halteelement (2) einschließlich Erhebung (4) aus einem und der Federbalken (3) aus einem zweiten Material besteht.

7. SPM-Sonde nach Anspruch 6 **dadurch gekennzeichnet, dass** das Halteelement (2) und die Erhebung (4) aus Glas oder Silizium und der Federbalken (3) aus einem amorphen Dünnfilm besteht.

8. SPM-Sonde nach Anspruch 2, **dadurch gekennzeichnet, dass** das Halteelement (2), die Erhebung (4) und der Federbalken (3) aus jeweils unterschiedlichen Materialien bestehen.

9. SPM-Sonde nach Anspruch 8, **dadurch gekennzeichnet, dass** das Halteelement (2) aus Glas, die Erhebung (4) aus Silizium und der Federbalken (3) aus einem amorphen Dünnfilm besteht.

10. SPM-Sonde nach einem der vorangegangenen Ansprüche, **dadurch gekennzeichnet, dass** die Längsseitenflanken (7) des Halteelementes (2) und die Längsseitenflanken (8) der Erhebung (4) eine identische Neigung aufweisen, und vorzugsweise stufenlos aneinander anschließen.

11. SPM-Sonde nach Anspruch 10, **dadurch gekennzeichnet, dass** zumindest die vordere Stirnseitenflanke (13) eine hinterschnittene Form aufweist.

12. SPM-Sonde nach Anspruch 10 oder 11, **dadurch gekennzeichnet, dass** die Stirnseitenflanke (8) zumindest teilweise durch eine <111>-Ebene des Silizium-Kristalls gebildet ist und die <111>-Ebene herstellungsbedingt durch eine Querlinie (25) bestimmt ist, die orthogonal zur Federbalkenrichtung oberhalb der federbalkenseitigen Unterseite (14) des Halteelements (2) verläuft.

13. Verfahren zur Herstellung einer SPM-Sonde (1), mit einem Halteelement (2) und einem daran anschließenden Federbalken (3), der an seinem freien Ende eine Abtastspitze (5) trägt, gemäß einem der vorangegangenen Ansprüche 1-5 oder 10-12, **gekennzeichnet durch** die folgenden Schritte:

   Bilden der Form des Federbalkens (3) und des Halteelementes (2), mit oder ohne Erhebung (4), **durch** Ätzschritte von einer ersten Materialseite (18) des Ausgangsmaterials (17) her, und
   Einstellen der Dicke des Federbalkens (3) **durch** Ätzen von der anderen gegenüber liegenden zweiten Materialseite (19) des Ausgangsmaterials (17) her.

14. Verfahren nach Anspruch 13, **dadurch gekennzeichnet, dass** die seitlichen Längsseitenflanken (7) des Halteelementes (2) von einer Materialseite (18, 19) des Ausgangsmaterials (17) und die vordere Stirnseitenflanke (13), an der der Federbalken (3) befestigt ist, von der anderen Materialseite (19, 18) des Ausgangsmaterials (17) herausgearbeitet werden.

15. Verfahren nach einem der Ansprüche 13 - 14, **gekennzeichnet durch** die folgenden Schritte:

   Herausarbeiten der Längsseitenflanken (7, 8) der Sonde 1 sowie die Federbalkenform (3) **durch** anisotropes Ätzen von einer der Seiten (18, 19) des Ausgangsmaterials (17) her,
   Abdecken der jeweiligen Seite (18, 19) des Ausgangsmaterials (17) einschließlich der geätzten Strukturen mit einem ätzresistenten Schutzfilm (23),
   Ätzen zumindest der Stirnseitenflanke (13) des Halteelementes (2) von gegenüberliegenden jeweils anderen der Seiten (19, 18) des Ausgangsmaterials (17) ausgehend mittels einem anisotropen nasschemischen Verfahren, und selektives Entfernen des Schutzfilms (23).

16. Verfahren nach einem der vorangegangen Ansprüche 13-15,
   **dadurch gekennzeichnet, dass**
   zunächst der Federbalken (3) aus der Silizium-Schicht oberhalb des Ätzstopps (21) aus der ersten Materialseite 18 des Silizium-Scheibe herausgearbeitet wird,
   dann die Materialseite (18) der Silizium-Scheibe einschließlich der geätzten Strukturen mit einem ätzresistenten Schutzfilm (23) abgedeckt wird,
   anschließend ein Fenster in dem ätzresistenten Schutzfilm (23) geöffnet wird, das den Federbalken (3) ausschließt und gleichzeitig eine Ätzstopplinie (25) des Halteelementes (2) definiert, die die Länge des Federbalkens (3) bestimmt,
   danach mittels einem nasschemischen anisotropen Verfahren das Silizium innerhalb des geöffneten Fensters derart geätzt wird, dass der Federbalken (3) durch Unterätzen vollständig freigelegt wird und unterhalb des Federbalkens (3) eine <111>-Fläche des Silizium-Kristalls ausbildet wird,
   dann mittels einem nasschemischem anisotropen Verfahren das Halteelement (2) von der zweiten Materialseite (19) der Silizium-Scheibe derart herausgearbeitet wird, dass sich eine <111>-Fläche des Silizium-Kristalls als Stirnseitenflanke (13) des Ätzprozesses ausbildet, die auf die zuvor von der gegenüberliegenden Materialseite (18) der Silizium-Scheibe ausgebildeten <111>-Fläche unterhalb des Federbalkens (3) trifft,
   anschließend das nasschemische anisotrope Ätzverfahren solange fortgesetzt wird, wobei der schnelle Ätzangriff auf die offen liegende Fläche zwischen den beiden von Vorder- und Rückseite geätzten <111>-Flächen ausgenutzt wird, um zumindest in einem Bereich unterhalb des Federbalkens (3) eine neue <111>-Fläche mit hinterschnittenem Flankenprofil auszubilden und
   abschließend der Schutzfilm (23) selektiv entfernt wird.

17. Verfahren nach Anspruch 16, **dadurch gekennzeichnet, dass**
   nach dem Entfernen des Schutzfilms (23) ein weiterer Schutzfilm (23) auf die zweite Materialseite (19) der Silizium-Scheibe einschließlich der Ätzflanken aufgebracht wird,
   danach mittels einem anisotropen Ätzverfahren von der ersten Materialseite (18) der Silizium-Scheibe die Erhebung (4) aus dem Halteelement (2) herausarbeitet wird, die den Federbalken (3) mit einschließt und
   abschließend der neue Schutzfilm (23) wiederum selektiv entfernt wird.

**18.** Verfahren zur Herstellung einer SPM-Sonde, mit einem Halteelement (2) und einem daran anschließenden Federbalken (3), der an seinem freien Ende eine Abtastspitze (5) trägt, gemäß einem der vorangegangenen Ansprüche 6 - 9, **dadurch gekennzeichnet, dass** zumindest der Federbalken (3) zunächst separat gefertigt und anschließend mit der Erhebung (4) verbunden wird, wobei das Halteelement (2) und die Erhebung (4) einstückig gefertigt oder zusammengefügt sein können.

**Geänderte Patentansprüche gemäss Regel 137(2) EPÜ.**

**1.** SPM-Sonde (1), mit einem länglichen Halteelement (2) und mit einem über das Halteelement (2) stirnseitig vorstehenden, eine Abtastspitze (5) tragenden Federbalken (3), der an einer vorderen Stirnseite (12) des Halteelementes (2) der Sonde (1) angeordnet ist und dort aus einer vorderen Stirnseitenflanke (13) hervortritt, wobei das Halteelement (2) eine im wesentlichen trapezförmige Querschnittsform mit einer längeren (15') und einer kürzen Querkante (15") an der Stirnseitenflanke (13) aufweist, sowie mit kritischen Ecken (16) an einer der Querkanten (15', 15") der Stirnseitenflanke (13), die einer Probe beim Abtasten am nächsten liegen, **dadurch gekennzeichnet, dass** das Halteelement (2) eine längliche Erhebung (4) aufweist, die sich in Längsrichtung des Halteelementes (2) und des Federbalkens (3) erstreckt, wobei die Erhebung (4) mit einer im wesentlichen trapezförmigen Querschnittsform ausgebildet ist und der Federbalken (3) stirnseitig an einer schmalen Querkante (15) der Erhebung (4) des Halteelementes (2) angeordnet ist, und wobei die Erhebung (4) mit dem Federbalken (3) vorzugsweise an der längeren Querkante (15') der Stirnseitenflanke (13) des Halteelementes (2) angeordnet ist und die von einer gedachten, sich durch eine der kritischen Ecken (16) parallel zu den seitlichen Längsseitenkanten (22) der Halteelementunterseite (14) erstreckende gerade Linie und der Abtastspitze (5) aufgespannte Ebene gegenüber der Querkante (15') mindestens einen Neigungswinkel von 5 Grad aufweist.

**2.** SPM-Sonde nach Anspruch 1, **dadurch gekennzeichnet, dass** der vertikale Abstand H zwischen der Federbalkenunterseite (6), die die Abtastspitze (5) trägt, und der Halteelementunterseite (14), die die Erhebung (4) trägt, mindestens 1/20 der Breite L der Querkante (15') des Halteelementes (2) beträgt, an der die Erhebung (4) mit dem daran befestigten Federbalken (3) angeordnet ist.

**3.** SPM-Sonde nach einem der vorangegangenen Ansprüche, **dadurch gekennzeichnet, dass** das Ausgangsmaterial (17) für das Halteelement (2) und den Federbalken (3) einkristallines Silizium ist und zumindest die Stirnseitenflanke (13) des Halteelementes (2), an dem der Federbalken (3) befestigt ist, aus einer <111>-Ebene des Silizium-Kristalls gebildet ist.

**4.** SPM-Sonde nach Anspruch 3, **dadurch gekennzeichnet, dass** als Ausgangsmaterial (17) eine integrierte Ätzstoppschicht (21) aufweist, um die Dicke des Federbalkens (3) zu definieren.

**5.** SPM-Sonde nach Anspruch 1, **dadurch gekennzeichnet, dass** das Halteelement (2) einschließlich Erhebung (4) aus einem und der Federbalken (3) aus einem zweiten Material besteht.

**6.** SPM-Sonde nach Anspruch 5 **dadurch gekennzeichnet, dass** das Halteelement (2) und die Erhebung (4) aus Glas oder Silizium und der Federbalken (3) aus einem amorphen Dünnfilm besteht.

**7.** SPM-Sonde nach Anspruch 1, **dadurch gekennzeichnet, dass** das Halteelement (2), die Erhebung (4) und der Federbalken (3) aus jeweils unterschiedlichen Materialien bestehen.

**8.** SPM-Sonde nach Anspruch 7, **dadurch gekennzeichnet, dass** das Halteelement (2) aus Glas, die Erhebung (4) aus Silizium und der Federbalken (3) aus einem amorphen Dünnfilm besteht.

**9.** SPM-Sonde nach einem der vorangegangenen Ansprüche, **dadurch gekennzeichnet, dass** die Längsseitenflanken (7) des Halteelementes (2) und die Längsseitenflanken (8) der Erhebung (4) eine identische Neigung aufweisen, und abgestuft aneinander anschließen.

**10.** SPM-Sonde nach Anspruch 9, **dadurch gekennzeichnet, dass** zumindest die vordere Stirnseitenflanke (13) eine hinterschnittene Form aufweist.

**11.** SPM-Sonde nach einem der vorangegangenen Ansprüche, **dadurch gekennzeichnet, dass** die Stirnseitenflanke (8) zumindest teilweise durch eine <111>-Ebene des Silizium-Kristalls gebildet ist und die <111> -Ebene herstellungsbedingt durch eine Querlinie (25) bestimmt ist, die orthogonal zur Federbalkenrichtung oberhalb der federbalkenseitigen Unterseite (14) des Halteelements (2) verläuft.

**12.** Verfahren zur Herstellung einer SPM-Sonde (1), mit einem Halteelement (2) und einem daran anschließenden Federbalken (3), der an seinem freien Ende eine Abtastspitze (5) trägt, gemäß einem der vorangegangenen Ansprüche 1 - 4 oder 9 - 11, **ge-**

**kennzeichnet durch** die folgenden Schritte:

Bilden der Form des Federbalkens (3) und des Halteelementes (2), mit Erhebung (4), **durch** Ätzschritte von einer ersten Materialseite (18) des Ausgangsmaterials (17) her, und
Einstellen der Dicke des Federbalkens (3) **durch** Ätzen von der anderen gegenüber liegenden zweiten Materialseite (19) des Ausgangsmaterials (17) her.

**13.** Verfahren nach Anspruch 12, **dadurch gekennzeichnet, dass** die seitlichen Längsseitenflanken (7) des Halteelementes (2) von einer Materialseite (18, 19) des Ausgangsmaterials (17) und die vordere Stirnseitenflanke (13), an der der Federbalken (3) befestigt ist, von der anderen Materialseite (19, 18) des Ausgangsmaterials (17) herausgearbeitet werden.

**14.** Verfahren nach einem der Ansprüche 12 - 13, **gekennzeichnet durch** die folgenden Schritte:

Herausarbeiten der Längsseitenflanken (7, 8) der Sonde 1 sowie die Federbalkenform (3) **durch** anisotropes Ätzen von einer der Seiten (18, 19) des Ausgangsmaterials (17) her,
Abdecken der jeweiligen Seite (18, 19) des Ausgangsmaterials (17) einschließlich der geätzten Strukturen mit einem ätzresistenten Schutzfilm (23),
Ätzen zumindest der Stirnseitenflanke (13) des Halteelementes (2) von gegenüberliegenden jeweils anderen der Seiten (19, 18) des Ausgangsmaterials (17) ausgehend mittels einem anisotropen nasschemischen Verfahren, und
selektives Entfernen des Schutzfilms (23).

**15.** Verfahren nach einem der vorangegangen Ansprüche 12 - 14,
**dadurch gekennzeichnet, dass**
zunächst der Federbalken (3) aus der Silizium-Schicht oberhalb des Ätzstopps (21) aus der ersten Materialseite 18 des Silizium-Scheibe herausgearbeitet wird,
dann die Materialseite (18) der Silizium-Scheibe einschließlich der geätzten Strukturen mit einem ätzresistenten Schutzfilm (23) abgedeckt wird,
anschließend ein Fenster in dem ätzresistenten Schutzfilm (23) geöffnet wird, das den Federbalken (3) ausschließt und gleichzeitig eine Ätzstopplinie (25) des Halteelementes (2) definiert, die die Länge des Federbalkens (3) bestimmt,
danach mittels einem nasschemischen anisotropen Verfahren das Silizium innerhalb des geöffneten Fensters derart geätzt wird, dass der Federbalken (3) durch Unterätzen vollständig freigelegt wird und unterhalb des Federbalkens (3) eine <111>-Fläche des Silizium-Kristalls ausbildet wird,
dann mittels einem nasschemischem anisotropen Verfahren das Halteelement (2) von der zweiten Materialseite (19) der Silizium-Scheibe derart herausgearbeitet wird, dass sich eine <111>-Fläche des Silizium-Kristalls als Stirnseitenflanke (13) des Ätzprozesses ausbildet, die auf die zuvor von der gegenüberliegenden Materialseite (18) der Silizium-Scheibe ausgebildeten <111>-Fläche unterhalb des Federbalkens (3) trifft,
anschließend das nasschemische anisotrope Ätzverfahren solange fortgesetzt wird, wobei der schnelle Ätzangriff auf die offen liegende Fläche zwischen den beiden von Vorder- und Rückseite geätzten <111>-Flächen ausgenutzt wird, um zumindest in einem Bereich unterhalb des Federbalkens (3) eine neue <111>-Fläche mit hinterschnittenem Flankenprofil auszubilden und
abschließend der Schutzfilm (23) selektiv entfernt wird.

**16.** Verfahren nach Anspruch 15, **dadurch gekennzeichnet, dass**
nach dem Entfernen des Schutzfilms (23) ein weiterer Schutzfilm (23) auf die zweite Materialseite (19) der Silizium-Scheibe einschließlich der Ätzflanken aufgebracht wird,
danach mittels einem anisotropen Ätzverfahren von der ersten Materialseite (18) der Silizium-Scheibe die Erhebung (4) aus dem Halteelement (2) herausarbeitet wird, die den Federbalken (3) mit einschließt und
abschließend der neue Schutzfilm (23) wiederum selektiv entfernt wird.

**17.** Verfahren zur Herstellung einer SPM-Sonde, mit einem Halteelement (2) und einem daran anschließenden Federbalken (3), der an seinem freien Ende eine Abtastspitze (5) trägt, gemäß einem der vorangegangenen Ansprüche 5 - 8, **dadurch gekennzeichnet, dass** zumindest der Federbalken (3) zunächst separat gefertigt und anschließend mit der Erhebung (4) verbunden wird, wobei das Halteelement (2) und die Erhebung (4) einstückig gefertigt oder zusammengefügt sein können.

Fig. 1

Fig. 2

18

17

19

a

b

20

13

c

23

10

d

8

9 2 4 13 3

7

Fig. 3

18 21

17

a

19

b

23

c

8

d

3

7

10

e

13

9 2

4

Fig. 4

18

a

17
19
17

b

c

3

4
2

d

17

8   10
e
7
9

3
5

Fig. 5

18

17
19

a

b

c

d

3

e

4

4
2

8   10
f
7   9   2   13   3

4

Fig. 6

Fig. 7

Fig. 8

Fig. 9

Fig. 10

Fig. 11

Fig. 12

Fig. 13

**Europäisches**
**Patentamt**

**EUROPÄISCHER RECHERCHENBERICHT**

Nummer der Anmeldung

EP 08 00 5248

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 753 912 A (MATSUYAMA KATSUHIRO [JP]) 19. Mai 1998 (1998-05-19) * Abbildungen 1-3,6 * * Spalte 2, Zeile 8 - Zeile 24 * * Spalte 3, Zeile 45 - Spalte 5, Zeile 38 * * Spalte 7, Zeile 12 - Zeile 50 * | 1-6, 10-12 | INV. G12B21/02 |
| A | | 7-9, 13-18 | |
| X | JP 08 262040 A (OLYMPUS OPTICAL CO) 11. Oktober 1996 (1996-10-11) * Abbildungen 1,2 * | 1,3-5, 11-17 | |
| A | | 2,6-10, 18 | |
| X | EP 1 359 593 A (NANOWORLD AG [CH]) 5. November 2003 (2003-11-05) * Abbildungen 1-19 * * Absätze [0015] - [0039] * | 1,3,4, 11-15 | |
| A | | 2,5-10, 16-18 | RECHERCHIERTE SACHGEBIETE (IPC) |
| X | JP 10 307144 A (OLYMPUS OPTICAL CO) 17. November 1998 (1998-11-17) * Abbildungen 1,4 * | 1,3,4, 11,12 | G12B G01N |
| A | | 2,5-10, 13-18 | |
| X | JP 05 018740 A (HITACHI LTD) 26. Januar 1993 (1993-01-26) * Abbildungen 1-12 * | 1,3,4, 11,12 | |
| A | | 2,5-10, 13-18 | |

Der vorliegende Recherchenbericht wurde für alle Patentansprüche erstellt

| Recherchenort | Abschlußdatum der Recherche | Prüfer |
|---|---|---|
| Berlin | 28. April 2008 | Polesello, Paolo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                  

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 00 5248

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2008

| Im Recherchenbericht angeführtes Patentdokument | | Datum der Veröffentlichung | Mitglied(er) der Patentfamilie | | Datum der Veröffentlichung |
|---|---|---|---|---|---|
| US 5753912 | A | 19-05-1998 | JP<br>JP | 3599880 B2<br>9243648 A | 08-12-2004<br>19-09-1997 |
| JP 8262040 | A | 11-10-1996 | KEINE | | |
| EP 1359593 | A | 05-11-2003 | DE<br>DK<br>JP<br>JP<br>US | 50200467 D1<br>1359593 T3<br>3813591 B2<br>2003302328 A<br>2004046119 A1 | 24-06-2004<br>09-08-2004<br>23-08-2006<br>24-10-2003<br>11-03-2004 |
| JP 10307144 | A | 17-11-1998 | JP | 3834378 B2 | 18-10-2006 |
| JP 5018740 | A | 26-01-1993 | JP | 2984094 B2 | 29-11-1999 |

EPO FORM P0461

Für nähere Einzelheiten zu diesem Anhang : siehe Amtsblatt des Europäischen Patentamts, Nr.12/82